# FASCICULE DE BREVET EUROPEEN

(11) **EP 4 581 389 B1**
(45) Date de publication et mention de la délivrance du brevet: **09.09.2026**
(21) Numéro de dépôt: 23750669.6
(22) Date de dépôt: 24.07.2023
(51) Int. Cl.: G01S 7/484, G01S 7/487, G01S 7/481, G01S 7/4865, G01S 7/497, G01S 17/10, G01S 17/95, G01S 17/58

(54) **SYSTEME LIDAR POUR MESURES VELOCIMETRIQUES**
LIDAR-SYSTEM ZUR MESSUNG DER GESCHWINDIGKEIT VON FLUIDEN
LIDAR SYSTEM FOR MEASURING THE VELOCITY OF FLUIDS

(30) Priorité: 02.09.2022 FR 2208828
(43) Date de publication de la demande: 09.07.2025
(73) Titulaire: Office National d'Etudes et de Recherches Aérospatiales, 91120 Palaiseau (FR)
(72) Inventeur: MICHEL, David Tomline, 91120 PALAISEAU (FR); LOMBARD, Laurent, 91120 PALAISEAU (FR); VALLA, Matthieu, 91120 PALAISEAU (FR)
(74) Mandataire: IPAZ
(86) Numéro de dépôt international: PCT/FR2023/051153
(87) Numéro de publication internationale: WO 2024/047296

(56) Documents cités:
- FR-A1- 2 867 620
- FR-A1- 3 105 443
- US-A1- 2017 153 327

## Description

### Domaine technique

La présente description concerne un système LIDAR pour effectuer des mesures vélocimétriques, ainsi qu'un procédé de mesure correspondant.

### Technique antérieure

Les systèmes LIDAR, pour «Llght Detection And Ranging» en anglais ou systèmes de détection et de télémétrie utilisant la lumière, sont utiles pour effectuer des mesures de distance d'éloignement et de vitesse d'une cible. Ils mettent en œuvre un faisceau laser qui est dirigé vers la cible, et analysent une partie de ce faisceau qui est rétroréfléchie ou rétrodiffusée par cette cible. La mesure de distance résulte d'une estimation directe ou indirecte du temps de vol du rayonnement pour parcourir en aller et retour la distance d'éloignement de la cible par rapport au système LIDAR, et la vitesse de la cible est déduite d'une mesure du décalage fréquentiel d'effet Doppler qui affecte la partie du rayonnement qui a été rétroréfléchie ou rétrodiffusée par la cible.

Dans certaines circonstances et pour certaines applications, il est particulièrement avantageux que le faisceau de rayonnement qui est émis en direction de la cible soit constitué par une série d'impulsions successives. En effet, chaque impulsion peut ainsi avoir des valeurs de puissance instantanée qui sont très supérieures à celle d'un rayonnement continu, permettant d'augmenter en conséquence la puissance de la partie du rayonnement qui est collectée après avoir été rétrodiffusée par la cible. Ce premier avantage est particulièrement important pour un système LIDAR qui est destiné à mesurer des vitesses anémométriques, car la puissance de la partie du rayonnement qui est collectée est alors très faible. Un second avantage à utiliser un système LIDAR impulsionnel provient du fait qu'une source laser continue qui est incorporée dans un tel système peut alors avoir une puissance qui ne présente pas de danger oculaire pour des opérateurs.

De tels systèmes LIDAR impulsionnels peuvent être utilisés pour mesurer la distance d'éloignement et la vitesse d'éloignement d'un objet solide qui constitue la cible.

Mais certains systèmes LIDAR impulsionnels sont spécialement dédiés à des mesures anémométriques. La cible est alors constituée par des particules qui sont situées dans une portion d'atmosphère, les impulsions sont émises par une voie d'émission du système LIDAR en direction de cette portion d'atmosphère, et une voie de détection de ce système LIDAR est adaptée pour collecter la partie des impulsions qui a été rétrodiffusée par les particules situées dans la portion d'atmosphère. Une particularité de ces systèmes LIDAR dédiés à des mesures anémométriques est d'être adaptés pour détecter des parties rétrodiffusées des impulsions émises dont les valeurs de puissance sont très faibles. Selon une conception possible des systèmes LIDAR pour mesures anémométriques, telle que décrite dans WO 2021/053290 A1, la portion d'atmosphère qui est concernée par une mesure est déterminée par une convergence du faisceau de rayonnement des impulsions émises. Cette portion d'atmosphère est superposée à la zone d'espace, appelée zone de Rayleigh, dans laquelle le rayonnement qui est émis par le système LIDAR est le plus concentré.

Le document US2017/0153327A1 décrit un LIDAR adapté pour mesurer une vitesse d'une cible en faisant varier une fréquence de modulation sur la voie émission.

Mais pour les systèmes LIDAR les plus faciles à mettre en œuvre, pour lesquels une même optique de sortie est commune à la voie d'émission et à la voie de détection, cette optique de sortie génère une réflexion partielle du rayonnement émis sur certains de ses composants optiques. Cette réflexion interne produit une ou plusieurs composantes dans le signal de détection qui ne sont pas relatives à la cible. Or ces composantes, qui proviennent de l'interface optique entre le système LIDAR et l'espace de propagation libre du rayonnement, et qui sont appelées communément signal Narcisse, peuvent avoir une intensité importante, voire très importante. Alors, un tel signal Narcisse peut être superposé à une composante utile du signal de détection qui serait générée par une cible située à courte distance du système LIDAR, en empêchant de détecter valablement une telle composante utile. En particulier, le signal Narcisse est beaucoup plus intense que la composante utile du signal de détection dans le cas d'applications anémométriques.

### Problème technique

A partir de cette situation, un but de la présente invention est de fournir un système LIDAR pour lequel une composante utile du signal de détection relative à une cible qui est située à courte distance peut être distinguée du signal Narcisse, et peut être exploitée pour fournir une estimation de la distance et/ou de la vitesse de cette cible.

Un but annexe de l'invention est de fournir un tel système LIDAR qui soit efficace pour une faible distance de mesure, et qui permette d'effectuer des mesures de vitesse anémométrique.

### Résumé de l'invention

Pour atteindre l'un au moins de ces buts ou un autre, un premier aspect de l'invention propose un système LIDAR qui est adapté pour mesurer une vitesse d'au moins une cible, et qui comprend :
- une voie d'émission, adaptée pour émettre des impulsions de rayonnement en direction de la cible à travers une optique de sortie du système LIDAR ;
- une voie de détection, comprenant un photodétecteur, et adaptée pour collecter, aussi à travers l'optique de sortie, et diriger sur le photodétecteur, une partie des impulsions qui a été rétroréfléchie ou rétrodiffusée par la cible, de façon à produire un signal de détection ; et
- une unité de traitement de signal, configurée pour délivrer un résultat de la mesure de vitesse qui est relatif à la cible, à partir du signal de détection.

Un tel système LIDAR de l'invention possède en outre les caractéristiques suivantes :
- la voie d'émission est adaptée en outre pour varier une fréquence de modulation du rayonnement à l'intérieur de chaque impulsion, de sorte qu'une composante du signal de détection qui est utile pour mesurer la vitesse et appelée composante utile, soit décalée spectralement en fonction d'une distance d'éloignement de la cible par rapport au système LIDAR ; et
- l'unité de traitement de signal est configurée en outre pour extraire la composante utile d'un spectre du signal de détection, de façon à isoler cette composante utile par rapport à au moins une autre composante du signal de détection qui résulte d'une rétro-réflexion ou rétrodiffusion partielle des impulsions émises se produisant dans l'optique de sortie du système LIDAR, et pour obtenir le résultat de la mesure de vitesse à partir de la composante utile extraite.

Dans le système LIDAR de l'invention, la composante utile du signal de détection est distinguée du signal Narcisse par un décalage fréquentiel apparent qui dépend de la distance d'éloignement de la cible par rapport au système LIDAR. Ce décalage fréquentiel permet de séparer la composante utile du signal Narcisse, par exemple en réalisant un filtrage numérique de la composante utile du signal de détection, sélectivement par rapport au signal Narcisse. Il est ainsi possible pour le système LIDAR de l'invention, de fournir un résultat de mesure vélocimétrique, et éventuellement aussi un résultat de mesure télémétrique, même pour une cible qui est située à courte distance devant l'optique de sortie. Une telle mesure télémétrique peut alors procéder par détermination du décalage fréquentiel qui affecte au moment de sa réception, la partie rétrofléchie ou rétrodiffusée des impulsions.

Dans un tel système LIDAR, la fréquence de modulation qui est variée à l'intérieur de chaque impulsion peut être directement la fréquence optique du rayonnement de cette impulsion. Autrement dit, le système LIDAR peut mettre en œuvre une modulation de fréquence optique.

Alternativement, la modulation qui est appliquée aux impulsions émises en direction de la cible peut être une modulation d'amplitude, notamment une modulation sinusoïdale d'amplitude, avec une fréquence de sinusoïde qui varie en fonction du temps à l'intérieur de chaque impulsion. Cette fréquence de sinusoïde de modulation d'amplitude est alors la fréquence de modulation qui est variée selon l'invention.

La voie de détection peut être agencée pour produire une détection hétérodyne de la partie rétrofléchie ou rétrodiffusée des impulsions. Dans ce cas, la voie d'émission peut en outre être adaptée pour appliquer aux impulsions émises un décalage fréquentiel supplémentaire qui est constant, en plus de la variation de la fréquence de modulation à l'intérieur de chaque impulsion, et la détection hétérodyne est avantageusement effectuée en mélangeant un signal de référence qui ne présente pas ce décalage fréquentiel supplémentaire qui est constant, avec la partie rétroréfléchie ou rétrodiffusée des impulsions.

Mais, un système LIDAR conforme à l'invention peut alternativement mettre en œuvre un mode de détection qui ne soit pas de type hétérodyne. Par exemple, la voie de détection peut être adaptée pour réaliser une détection directe de la partie des impulsions qui a été rétroréfléchie ou rétrodiffusée par la cible. Une telle détection directe peut notamment être utilisée lorsque la modulation qui est appliquée à l'intérieur de chaque impulsion est du type modulation d'amplitude.

Un système LIDAR qui est conforme à l'invention peut notamment être adapté pour mesurer une vitesse anémométrique. Comme indiqué plus haut pour cette application, la cible est constituée par des particules qui sont situées dans une portion d'atmosphère, les impulsions sont émises par la voie d'émission en direction de la portion d'atmosphère, et la voie de détection est adaptée pour collecter et détecter la partie des impulsions qui a été rétrodiffusée par les particules situées dans la portion d'atmosphère. En particulier, encore pour cette application de mesure de vitesse anémométrique, l'optique de sortie peut être adaptée pour transmettre les impulsions vers l'extérieur du système LIDAR sous forme d'un faisceau convergent du rayonnement, avec une convergence de ce faisceau qui détermine la portion d'atmosphère concernée par la mesure de vitesse anémométrique. La distance de mesure, c'est-à-dire la distance d'éloignement de la portion d'atmosphère qui est concernée par la mesure de vitesse anémométrique, peut alors être déterminée à partir de la convergence qui est appliquée au faisceau des impulsions émises.

Dans des modes préférés de réalisation de l'invention, la voie d'émission peut être adaptée pour varier la fréquence de modulation à l'intérieur de chaque impulsion selon une rampe de modulation de fréquence à pente constante. En outre, la voie d'émission peut être adaptée de façon supplémentaire pour changer un signe de la pente de cette rampe de variation de la fréquence de modulation entre deux impulsions qui sont émises successivement. En particulier, la pente de la rampe de variation de la fréquence de modulation peut être égale en valeur absolue mais opposée en signe entre deux impulsions qui sont émises successivement. Dans ce cas, l'unité de traitement de signal peut être configurée pour obtenir le résultat de la mesure de vitesse à partir d'une somme de deux décalages fréquentiels respectifs relatifs à une première composante utile extraite qui correspond à celles des impulsions émises pour lesquelles la pente de la rampe de variation de la fréquence de modulation est positive, et à une seconde composante utile extraite qui correspond à celles des impulsions émises pour lesquelles la pente de la rampe de variation de la fréquence de modulation est négative. Simultanément, l'unité de traitement de signal peut être configurée en outre pour obtenir une évaluation de la distance d'éloignement de la cible par rapport au système LIDAR à partir d'une différence entre les décalages fréquentiels respectifs relatifs à la première composante utile extraite qui correspond à celles des impulsions émises pour lesquelles la pente de la rampe de variation de la fréquence de modulation est positive, et à la seconde composante utile extraite qui correspond à celles des impulsions émises pour lesquelles la pente de la rampe de variation de la fréquence de modulation est négative. Une telle évaluation de la distance d'éloignement de la cible est alors indépendante d'une détermination de cette même distance d'éloignement obtenue à partir de la convergence du faisceau des impulsions.

Toutefois, lorsque la distance d'éloignement de la cible par rapport au système LIDAR est connue par ailleurs, la mesure de vitesse peut être obtenue à partir d'une variation de la fréquence de modulation qui est la même pour toutes les impulsions. Ceci s'applique en particulier pour une mesure de vitesse anémométrique lorsque la distance d'éloignement de la portion d'atmosphère qui est concernée par la mesure est déterminée par la convergence du faisceau de rayonnement des impulsions émises.

Dans une telle réalisation de l'invention, pour laquelle la distance d'éloignement de la cible est connue par ailleurs, la voie d'émission peut être adaptée pour émettre les impulsions de rayonnement toutes avec la même rampe de modulation de fréquence. L'unité de traitement de signal peut alors être configurée pour obtenir le résultat de la mesure de vitesse à partir d'une seconde contribution à un décalage fréquentiel qui est relatif à la composante utile extraite, cette seconde contribution étant calculée en soustrayant du décalage fréquentiel une première contribution qui est produite par la rampe de modulation de fréquence en combinaison avec la distance d'éloignement de la cible.

Un second aspect de l'invention propose un procédé de mesure d'une vitesse d'au moins une cible en utilisant un système LIDAR, comprenant les étapes suivantes :
/1/ émettre des impulsions de rayonnement en direction de la cible à travers une optique de sortie ;
/2/ en utilisant l'optique de sortie, collecter une partie des impulsions qui a été rétroréfléchie ou rétrodiffusée par la cible ;
/3/ détecter la partie rétroréfléchie ou rétrodiffusée des impulsions, en utilisant un photodétecteur qui produit un signal de détection ; et
/4/ à partir du signal de détection, délivrer un résultat de la mesure de vitesse qui est relatif à la cible.

Selon l'invention, le procédé possède les caractéristiques supplémentaires suivantes :
- une fréquence de modulation du rayonnement est variée à l'intérieur de chaque impulsion lors de l'étape /1/, de sorte qu'une composante du signal de détection qui est utilisée à l'étape /4/ pour la mesure de vitesse et appelée composante utile, soit décalée spectralement en fonction d'une distance d'éloignement de la cible par rapport au système LIDAR ; et
- la composante utile est extraite d'un spectre du signal de détection lors de l'étape /4/, de façon à isoler cette composante utile par rapport à au moins une autre composante du signal de détection qui résulte d'une rétro-réflexion ou rétrodiffusion partielle des impulsions émises se produisant dans l'optique de sortie, puis le résultat de la mesure de vitesse est obtenu à partir de la composante utile extraite.

Un tel procédé peut être mis en œuvre notamment pour effectuer une mesure anémométrique, mais pas exclusivement. En outre, le système LIDAR peut être embarqué à bord d'un aéronef, et le procédé exécuté pendant un vol de l'aéronef.

De façon générale, un procédé conforme au second aspect de l'invention peut être mis en œuvre en utilisant un système LIDAR qui est conforme au premier aspect de l'invention.

Différentes mises en œuvre du procédé de l'invention peuvent utiliser l'une au moins des caractéristiques supplémentaires suivantes :
- la fréquence de modulation qui est variée à l'intérieur de chaque impulsion peut être directement la fréquence optique du rayonnement de cette impulsion, ou peut être une fréquence de sinusoïde de modulation d'amplitude du rayonnement de chaque impulsion ;
- la détection de la partie des impulsions qui a été rétroréfléchie ou rétrodiffusée peut être de type hétérodyne ou être une détection directe ;
- la fréquence de modulation à l'intérieur de chaque impulsion peut être variée selon une rampe de modulation de fréquence à pente constante. Possiblement, un signe de la pente de cette rampe de variation de la fréquence de modulation peut être changé entre deux impulsions qui sont émises successivement. En particulier, la pente de la rampe de variation de la fréquence de modulation peut être égale en valeur absolue mais opposée en signe entre deux impulsions qui sont émises successivement ; et
- pour une application anémométrique, l'optique de sortie peut transmettre les impulsions vers l'extérieur du système LIDAR sous forme d'un faisceau convergent du rayonnement, avec une convergence de ce faisceau qui détermine la portion d'atmosphère concernée par la mesure de vitesse anémométrique. Dans ce cas, toutes les impulsions de rayonnement peuvent être émises avec la même rampe de modulation de fréquence, et le résultat de la mesure de vitesse peut être obtenu à partir d'une seconde contribution à un décalage fréquentiel qui est relatif à la composante utile extraite, cette seconde contribution étant calculée en soustrayant du décalage fréquentiel une première contribution qui est produite par la rampe de modulation de fréquence en combinaison avec la distance d'éloignement de la portion d'atmosphère.

En particulier, lorsque deux impulsions qui sont émises successivement ont des rampes de modulation de fréquence à pentes constantes et signes opposés, le résultat de la mesure de vitesse de la cible peut être obtenu à partir d'une somme de deux décalages fréquentiels respectifs relatifs à une première composante utile extraite qui correspond à celles des impulsions émises pour lesquelles la pente de la rampe de modulation de la fréquence du rayonnement est positive, et à une seconde composante utile extraite qui correspond à celles des impulsions émises pour lesquelles la pente de la rampe de modulation de la fréquence du rayonnement est négative. En parallèle, une évaluation de la distance d'éloignement de la cible par rapport au système LIDAR peut être obtenue à partir d'une différence entre les décalages fréquentiels respectifs relatifs à ces première et seconde composantes utiles extraites.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un schéma synoptique d'un système LIDAR conforme à l'invention, pour une application de mesure de vitesse anémométrique, avec modulation de fréquence optique et détection hétérodyne ;
[Fig. 2a] et [Fig. 2b] sont deux spectrogrammes obtenus avec le système LIDAR de [Fig. 1], pour deux valeurs de distance de mesure ;
[Fig. 3] reproduit deux spectres d'un signal de détection hétérodyne obtenu avec le système LIDAR de [Fig. 1] ;
[Fig. 4] illustre une application possible du système LIDAR de [Fig. 1] ; et
[Fig. 5] correspond à [Fig. 1] pour une application de mesure de vitesse de cible avec modulation d'amplitude et détection directe.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

L'invention est d'abord décrite pour une application de mesure de vitesse anémométrique, en utilisant une modulation de fréquence optique. Dans un second temps, elle sera décrite pour une application de mesure de la vitesse d'un objet solide qui constitue la cible, en utilisant une modulation d'amplitude.

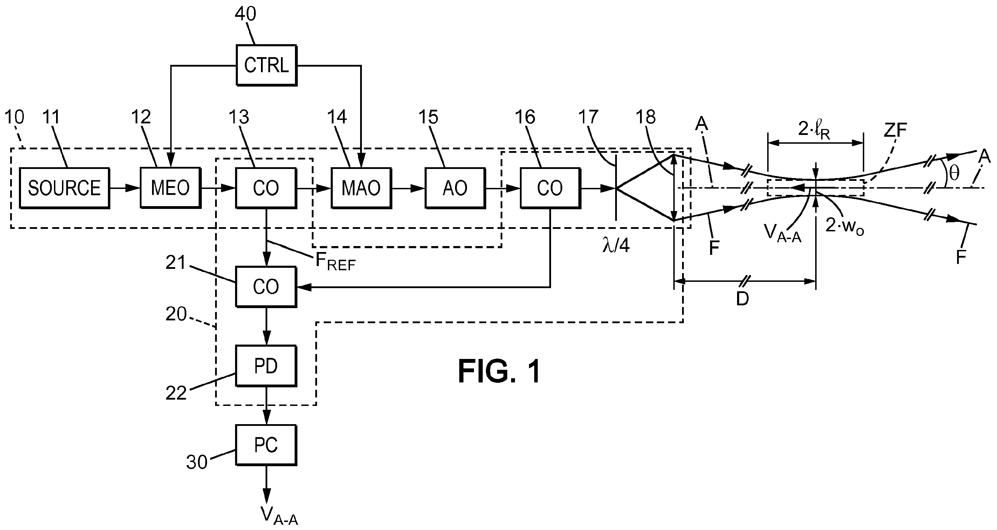

Conformément à [Fig. 1], un système LIDAR pour mesure de vitesse anémométrique comporte une voie d'émission 10, une voie de détection 20 et une unité de traitement de signal 30.

La voie d'émission 10 comprend une source laser 11 notée SOURCE, un modulateur optique 14 noté MAO, un amplificateur optique 15 noté AO, et une optique de sortie 18. La source laser 11 peut être d'un type à émission continue, par exemple produisant un rayonnement de longueur d'onde λ égale à environ 1,55 µm (micromètre). Le modulateur 14 peut être de type acousto-optique, et commandé pour découper le rayonnement qui est issu de la source laser 11 en impulsions successives. D'une façon qui est usuelle mais non-obligatoire, le modulateur 14 peut appliquer en outre un décalage fréquentiel constant à la fréquence optique du rayonnement, par exemple un décalage qui est égal à environ 40 MHz (mégahertz). L'amplificateur optique 15 augmente la puissance des impulsions de rayonnement qui sont ainsi formées, et ces impulsions sont transmises vers l'extérieur par l'optique de sortie 18 sous la forme d'un faisceau F dont la direction centrale de propagation est A-A. De façon connue, le découpage du rayonnement en impulsions successives permet d'obtenir des valeurs élevées de puissance instantanée du rayonnement à l'intérieur de chaque impulsion, ce qui est particulièrement favorable à des mesures de anémométriques. Un tel fonctionnement d'émission par impulsions peut en effet permettre de mettre en œuvre des valeurs de puissance instantanée de rayonnement, à l'intérieur de chaque impulsion à profil sensiblement rectangulaire, qui sont comprises entre 100 W (watt) et 5·10⁵ W, par exemple égale à 500 W. De telles valeurs ne sont pas accessibles pour un rayonnement laser continu avec les composants d'amplification optique qui sont disponibles actuellement ou compatibles avec l'application anémométrique. L'optique de sortie 18 peut être constituée par une ou plusieurs lentilles convergentes, et peut déterminer la dimension de la pupille de sortie de la voie d'émission 10. Par exemple, cette pupille de sortie peut avoir un rayon de 0,07 m (mètre) environ. Les composants optiques de la voie d'émission 10, en dehors de l'optique de sortie 18, peuvent avantageusement être réalisés par une technologie de fibre optique, permettant de réduire l'encombrement du système LIDAR et de faciliter l'alignement optique de ces composants.

L'optique de sortie 18 est conçue pour produire le faisceau F des impulsions de rayonnement avec une structure de faisceau convergent dans une zone d'espace qui est située en aval cette optique de sortie, par rapport au sens de propagation du rayonnement qui sort de la voie d'émission 10. Ainsi le faisceau F possède des sections transversales, perpendiculairement à sa direction centrale de propagation A-A, qui diminuent entre l'optique de sortie 18 et une zone de focalisation notée ZF, puis qui augmentent sous forme d'un faisceau divergent au-delà de cette zone de focalisation ZF. De façon connue, notamment en utilisant un modèle de faisceau gaussien, la zone de focalisation ZF peut être assimilée à un cylindre d'axe superposé à la direction centrale de propagation A-A, de rayon w₀ = λ/(π·θ), couramment appelé «waist», et de longueur 2·I_{R}, où I_{R} est la longueur de Rayleigh égale à λ/(π·θ²), θ étant le demi-angle de divergence du faisceau F au-delà de la zone de focalisation ZF, exprimé en radian. Typiquement, la distance entre l'optique de sortie 18 et la zone de focalisation ZF, qui est notée D et qui peut être sélectionnée en ajustant une longueur focale ou une position longitudinale de l'optique de sortie 18, peut varier entre quelques mètres et plusieurs centaines de mètres, la longueur de Rayleigh I_{R} variant alors corrélativement de quelques dizaines de centimètres à quelques mètres, et le rayon w₀ étant de l'ordre de quelques centimètres. De façon générale, le demi-angle de divergence θ du faisceau F peut être évalué en aval de la zone de focalisation ZF dans le sens de propagation du rayonnement, à une distance de la zone de focalisation ZF qui peut être égale à 1 km (kilomètre).

Pour effectuer une détection hétérodyne, la voie de détection 20 peut comprendre un photodétecteur 22 noté PD, et des coupleurs optiques 13, 16 et 21 notés CO, qui sont disposés pour combiner une partie rétrodiffusée du faisceau F avec une partie F_{REF} du rayonnement issu de la source laser 11. Cette partie de rayonnement F_{REF} fait fonction de rayonnement de référence pour la détection hétérodyne. De façon connue, la partie rétrodiffusée du faisceau F qui est ainsi détectée provient essentiellement de la zone de focalisation ZF, et est produite par des particules rétro-diffusantes qui sont situées dans cette zone. Le coupleur optique 16 peut avantageusement être du type à séparation de polarisation, auquel cas le rayonnement qui est issu de l'amplificateur optique 15 est polarisé linéairement, et une lame quart d'onde 17, notée λ/4, est insérée entre le coupleur optique 16 et l'optique de sortie 18. Le coupleur optique 16 et la lame quart d'onde 17 constituent ainsi un circulateur optique qui couple la voie d'émission 10 et la voie de détection 20 à l'optique de sortie 18 ainsi partagée.

Enfin, l'unité de traitement de signal 30 peut être constituée par un module informatique noté PC, qui héberge un programme approprié de traitement du signal de détection délivré par le photodétecteur 22. L'unité de traitement de signal 30 fournit en sortie une évaluation de la composante de vitesse des particules rétro-diffusantes qui sont dans la zone de focalisation ZF, cette composante étant parallèle à la direction centrale de propagation A-A et notée V_{A-A}.

Le fonctionnement d'un tel système LIDAR pour réaliser des mesures de vitesse anémométrique est très connu de l'Homme du métier, si bien qu'il n'est pas nécessaire de le répéter ici. Le système est orienté et le demi-angle de divergence θ ajusté pour que la zone de focalisation ZF soit dans une portion de l'atmosphère où la vitesse du vent est à mesurer. Les particules qui rétrodiffusent le faisceau F sont alors des poussières, microcristaux ou gouttelettes d'aérosol qui sont en suspension dans l'atmosphère à l'intérieur de la zone de focalisation ZF. La structure de l'optique de sortie 18, et sa commande lorsqu'elle permet un ajustement variable du demi-angle de divergence θ, peut fournir une évaluation de la distance d'éloignement d'un centre de la zone de focalisation ZF par rapport au système LIDAR, correspondant alors à la distance D qui a été introduite précédemment.

Pour l'invention, la voie d'émission 10 comprend en outre des moyens de modulation supplémentaires, qui sont adaptés pour varier la fréquence optique du rayonnement à l'intérieur de chacune des impulsions telles que formées par le modulateur acousto-optique 14. Par exemple, ces moyens supplémentaires de modulation de fréquence peuvent être constitués par un modulateur électro-optique 12, noté MEO, avec une unité de commande appropriée de celui-ci, désignée par la référence 40, notée CTRL et appelée contrôleur de modulation. Ils peuvent être insérés entre la source laser 11 et le modulateur acousto-optique 14. Dans différents modes de réalisation de l'invention, ces moyens de modulation de fréquence peuvent être disposés en amont ou en aval du coupleur optique 13 qui réalise le prélèvement du rayonnement de référence F_{REF}. On supposera dans la suite qu'ils sont disposés en amont du coupleur optique 13 par rapport au sens de propagation du rayonnement dans la voie d'émission 10, et l'Homme du métier saura adapter la description qui suit au cas d'une disposition des moyens supplémentaires de modulation en aval du coupleur optique 13.

Par exemple, le contrôleur de modulation 40 est configuré pour que le modulateur acousto-optique 14 découpe le rayonnement qui est produit initialement par la source laser 11 en impulsions successives de durées individuelles égales à 1 µs (microseconde), et pour que le modulateur électro-optique 12 applique une augmentation linéaire de la fréquence optique du rayonnement à l'intérieur de chaque impulsion, de 0 MHz (mégahertz) environ en début d'impulsion à 500 MHz environ en fin d'impulsion. La pente p de variation de la fréquence optique est alors égale à +0,500 MHz/ns (mégahertz par nanoseconde). La partie des impulsions produites par la voie d'émission 10 qui est rétrodiffusée dans la zone de focalisation ZF parvient alors au photodétecteur 22 avec un retard de propagation par rapport au rayonnement de référence F_{REF}, ce retard correspondant à la durée de propagation aller-retour entre l'optique d'émission 18 et la zone de focalisation ZF. Du fait de la modulation de fréquence introduite selon l'invention, elle présente alors une première contribution de décalage fréquentiel par rapport au rayonnement de référence F_{REF}, qui est égal à -p·2·D/C, où C est la vitesse de propagation du rayonnement à l'extérieur du système LIDAR entre l'optique de sortie 18 et la zone de focalisation ZF. Cette première contribution de décalage fréquentiel est notée Δf₁ dans la suite. De façon connue, la composante V_{A-A} de la vitesse des particules rétro-diffusantes qui sont contenues dans la zone de focalisation ZF, cette composante étant parallèle à la direction centrale de propagation A-A, produit une seconde contribution de décalage fréquentiel, notée Δf₂ et égale à 2·V_{A-A}/λ, lorsque la vitesse anémométrique V_{A-A} est orientée comme indiquée dans [Fig. 1]. Pour le mode de réalisation de l'invention de [Fig. 1], les deux contributions Δf₁ et Δf₂ s'additionnent pour constituer la fréquence du signal de détection hétérodyne qui est délivré par le photodétecteur 22. Elles s'additionnent aussi au décalage fréquentiel constant qui est éventuellement produit par le modulateur acousto-optique 14.

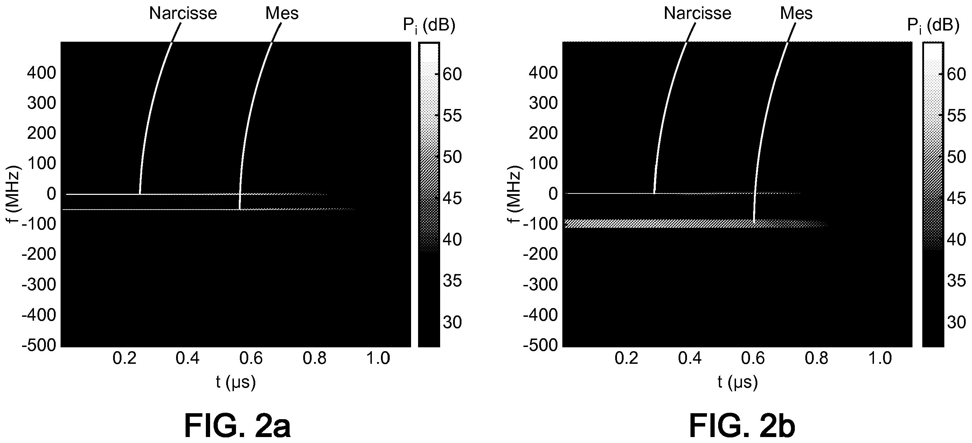

[Fig. 2a] et [Fig. 2b] indiquent les fréquences des composantes spectrales du signal de détection hétérodyne, en fonction du temps à l'intérieur de chaque impulsion. Pour chaque spectrogramme, l'axe horizontal repère le temps, noté t et exprimé en microsecondes (µs), l'axe vertical repère la fréquence, notée f et exprimée en mégahertz (MHz), et l'échelle de tons à droite de chaque spectrogramme repère la puissance spectrale instantanée, notée Pᵢ et exprimée en décibels (dB) par rapport à un niveau de base relatif au bruit. Pour le spectrogramme de [Fig. 2a], l'optique de sortie 18 est ajustée pour que la distance d'éloignement D de la zone de focalisation ZF soit égale à 15 m (mètre). La longueur 2·I_{R} de cette zone de focalisation ZF est alors égale à 90 cm (centimètre). Pour le spectrogramme de [Fig. 2b] : D est égale à 30 m et 2·I_{R} est égale à 3,5 m. Les valeurs numériques des autres paramètres du système LIDAR sont celles déjà citées, identiques pour les deux spectrogrammes, hormis la valeur du décalage fréquentiel constant qui est produit par le modulateur acousto-optique 14 et qui est nulle. Les deux composantes du signal de détection hétérodyne qui apparaissent dans chaque spectrogramme correspondent respectivement à une rétro-réflexion partielle des impulsions sur l'optique de sortie 18, désignée par «Narcisse» dans les spectrogrammes et appelée signal Narcisse, et à la partie des impulsions qui a été rétrodiffusée dans la zone de focalisation ZF, désignée par «Mes» et appelée signal de mesure. Le signal Narcisse correspond à D=0 et f=0, puisqu'il ne présente pas de retard de propagation qui soit significatif lors de son arrivée sur le photodétecteur 22 par rapport au rayonnement de référence F_{REF}, ni d'effet Doppler. Le signal de mesure parvient au photodétecteur 22 avec un retard Δt égal à 2·D/C par rapport au signal Narcisse, et présente une fréquence f qui est décalée de la première contribution Δf₁ en l'absence de vent dans la zone de focalisation ZF. Pour les conditions d'utilisation adoptées, le retard Δt est égal à 0,10 µs pour [Fig. 2a] et à 0,20 µs pour [Fig. 2b], et Δf₁ est égal à 50 MHz pour [Fig. 2a] et à 100 MHz pour [Fig. 2b]. L'instant initial (t=0) dans ces deux spectrogrammes correspond au début de la détection de la partie rétrodiffusée de l'impulsion de rayonnement. En outre, la largeur spectrale du signal de mesure est supérieure pour [Fig. 2b] par rapport à [Fig. 2a], à cause de la zone de focalisation ZF qui est beaucoup plus longue pour [Fig. 2b].

L'unité de traitement de signal 30 calcule une transformation de Fourier par rapport au temps du signal de détection hétérodyne qui est délivré par le photodétecteur 22. Elle extrait ensuite, par exemple en appliquant un filtrage adaptatif numérique, le signal de mesure dans le spectre du signal de détection hétérodyne, et détermine la fréquence f de ce signal de mesure. De façon générale, cette fréquence f est égale à Δf₀+ Δf₁+ Δf₂, où Δf₀ est le décalage fréquentiel constant à l'intérieur de toutes les impulsions qui est produit par le modulateur acousto-optique 14, le cas échéant. Lorsque la distance d'éloignement D est connue par ailleurs, notamment par l'ajustement de la focalisation de l'optique de sortie 18, la contribution de décalage fréquentiel Δf₁ est calculée par Δf₁=-p·2·D/C, et les deux contributions Δf₀ et Δf₁ sont retranchées à la valeur déterminée pour la fréquence f du signal de mesure. Le résultat de cette soustraction est la contribution de décalage fréquentiel Δf₂ qui correspond à l'effet Doppler, et la composante de la vitesse du vent dans la zone de focalisation ZF, parallèlement à la direction centrale de propagation A-A, est calculée par l'unité de traitement de signal 30 selon la formule : V_{A-A}=λ·Δf₂/2.

Le signal de mesure «Mes» tel qu'il vient d'être décrit en tant que composante spectrale qui est extraite du signal de détection hétérodyne, a été appelé composante utile du signal de détection dans la partie générale de la présente description.

Toutefois, pour des mesures anémométriques, la distance d'éloignement D de la zone de focalisation ZF peut dépendre de facteurs externes au système LIDAR, tels que des turbulences atmosphériques et/ou des variations thermiques de l'air présent sur le chemin des impulsions entre l'optique de sortie 18 et la zone de focalisation ZF, et/ou des variations de concentration des particules rétro-diffusantes le long de la direction centrale de propagation A-A. Le perfectionnement qui est décrit maintenant permet de déduire la valeur effective de la distance d'éloignement D à partir du signal de détection hétérodyne. Pour cela, le contrôleur de modulation 40 peut être configuré pour que certaines des impulsions soient émises avec une pente de rampe linéaire de variation de fréquence optique qui soit déterminée, par exemple positive, et d'autres impulsions avec une pente de rampe linéaire de variation de fréquence optique qui soit négative. De préférence, une impulsion sur deux est émise avec une pente p de rampe linéaire qui est positive, et les autres impulsions sont émises en utilisant -p comme pente de rampe linéaire. Alors, pour les premières impulsions, la fréquence du signal de mesure tel que résultant de la détection hétérodyne est Δf₀+Δf₁+Δf₂, comme précédemment, et est notée f₊. Pour les impulsions à pente -p de rampe linéaire, la fréquence du signal de mesure tel que résultant de la détection hétérodyne est Δf₀-Δf₁+Δf₂, notée f-. Les deux fréquences f₊ et f- sont déterminées par l'unité de traitement de signal 30 de la même façon que précédemment. Puis l'unité 30 détermine les contributions Δf₁ et Δf₂ de la façon suivante : Δf₁=(f₊-f₋)/2, et Δf₂=(f₊+f₋)/2 - Δf₀. Elle calcule ensuite la vitesse anémométrique V_{A-A} comme précédemment à partir de la valeur de la contribution Δf₂, et fournit une évaluation de la distance d'éloignement D en appliquant la formule suivante : D=-C·Δf₁/(2·p).

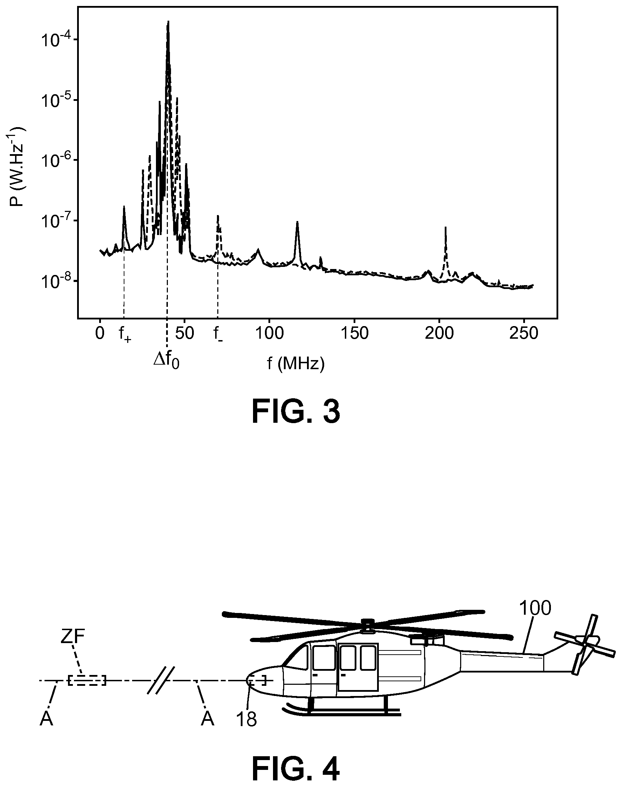

[Fig. 3] montre le signal de détection hétérodyne qui est obtenu pour une telle mise en œuvre de l'invention à pentes de rampes linéaires de variation de la fréquence optique qui sont opposées entre deux impulsions successives. Ce diagramme sépare le spectre des impulsions à valeur positive de pente, représenté en trait continu, de celui des impulsions à valeur négative de pente, représenté en traits interrompus. L'axe horizontal repère encore les valeurs de la fréquence f exprimées en mégahertz, et l'axe vertical repère les valeurs d'intensité spectrale exprimées en watt par hertz (W·Hz⁻¹) et notées P. Ce spectre composite de détection hétérodyne a été établi pour une valeur égale à 40 MHz du décalage fréquentiel constant Δf₀ qui est produit par le modulateur acousto-optique 14. Les deux spectres présentent chacun plusieurs composantes de signaux Narcisse qui correspondent à des réflexions partielles des impulsions sur plusieurs composants de l'optique de sortie 18, ainsi que sur la lame quart d'onde 17. Ces composantes de signaux Narcisse sont distantes de moins de 15 MHz de la valeur de 40 MHz pour f, correspondant à Δf₀. Les signaux de mesure correspondant aux deux pentes opposées sont désignés par leurs valeurs de fréquence respectives f₊ et f-. Les autres signaux, correspondant à des pics des spectres dont les valeurs pour la fréquence f sont supérieures à 90 MHz, proviennent de réflexions des impulsions à pentes opposées sur des obstacles qui sont présents en arrière-plan de la zone de focalisation ZF. Les pics qui sont situés aux valeurs 115 MHz et 205 MHz révèlent un obstacle à pouvoir élevé de rétrodiffusion qui est situé à la distance D'=-C·Δf₁/(2·p) avec Δf₁ = (205 MHz - 115 MHz)/2 = 45 MHz, soit D'=13,5 m. Pour ces mêmes spectres, d'après les valeurs de 15 MHz et 65 MHz lues pour f₊ et f-, respectivement, la distance d'éloignement D de la zone de focalisation ZF est égale à environ 7,5 m et la vitesse du vent dans cette zone de focalisation ZF est inférieure à 1 m.s⁻¹ (mètre par seconde).

Les exemples qui viennent d'être fournis montrent l'intérêt de la modulation de fréquence qui est introduite par l'invention, pour séparer spectralement le signal de mesure du signal Narcisse ou de l'ensemble des composantes du signal Narcisse, le cas échéant. En effet, grâce à la modulation de fréquence, la partie des impulsions émises qui est rétrodiffusée par les particules en suspension dans l'air peut être distinguée du signal Narcisse même pour des valeurs très faibles de la vitesse du vent. Cette distinction peut encore être faite pour des valeurs faibles de la distance d'éloignement D.

Un système LIDAR qui est conforme à l'invention et qui est adapté pour effectuer des mesures de vitesse anémométrique, peut être utilisé dans de nombreuses applications, parmi lesquelles sans limitation :
- des applications à bord d'un aéronef, pour lesquelles un encombrement et un poids du système LIDAR qui sont réduits constituent des avantages importants. [Fig. 4] montre un hélicoptère 100 qui est équipé d'un tel système LIDAR pour effectuer des mesures de vitesse anémométrique conformément à l'invention. Le système est de préférence installé à bord de l'hélicoptère pour que l'optique de sortie 18 soit située vers le nez de l'hélicoptère 100, et tournée en direction du demi-espace qui est en avant de l'hélicoptère. [Fig. 4] montre la disposition de la direction centrale de propagation A-A et de la zone de focalisation ZF qui en résulte ;
- des applications pour lesquelles la vitesse anémométrique à mesurer peut être faible ou très faible, telles que des mesures au niveau du sol ou à faible altitude, par exemple pour optimiser un fonctionnement d'éolienne, ou encore des mesures à partir d'aéronefs qui peuvent être en vol stationnaire. Dans ce cas, le modulateur acousto-optique 14 génère avantageusement le décalage fréquentiel constant Δf₀ qui est appliqué aux impulsions émises sans être appliqué au rayonnement de référence F_{REF}. De cette façon, une valeur de vitesse anémométrique qui est faible correspond à une fréquence de battement hétérodyne qui est proche de la valeur non-nulle de Δf₀, de sorte que la précision de mesure est améliorée sans nécessiter de mettre en œuvre un grand nombre d'impulsions par séquence de mesure, c'est-à-dire sans que la durée de mesure soit trop longue ; et
- des applications pour lesquelles la distance de mesure, entre l'optique de sortie 18 et la zone de focalisation ZF, est variable. Pour cela, l'optique de sortie 18 peut être adaptée pour varier à la demande la convergence du faisceau F des impulsions successives tel qu'il sort par cette optique. Par exemple, lorsque ce faisceau est issu d'une extrémité de fibre optique, l'optique de sortie 18 peut être une lentille convergente montée sur un support qui est mobile en translation parallèlement à la direction A-A, de façon à déplacer le foyer-objet de la lentille par rapport à l'extrémité de la fibre optique. Ainsi, le centre O de la zone de focalisation ZF peut être situé à une distance de l'optique de sortie 18 qui est contrôlable, par exemple entre 1 m et 1000 m.

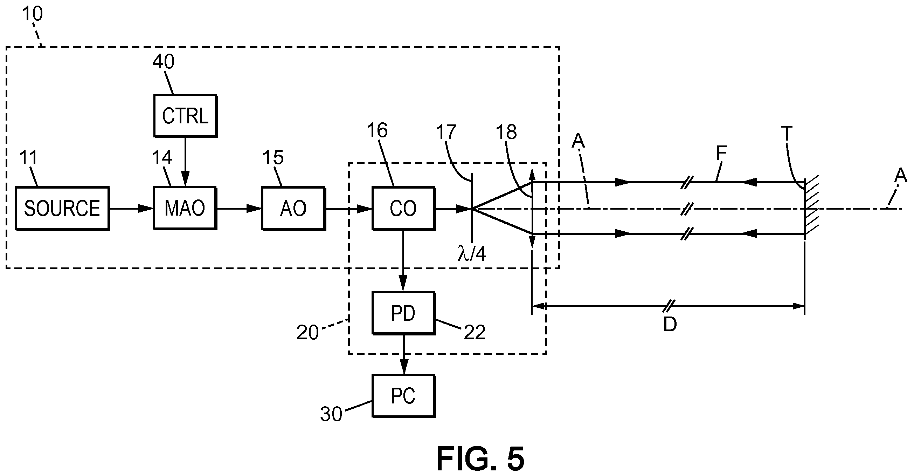

Le mode de réalisation de l'invention qui est illustré par [Fig. 5] est adapté pour mesurer la vitesse d'une cible rétroréfléchissante T. Si la cible T possède un pouvoir de rétro-réflexion qui est suffisant, il n'est plus nécessaire que le faisceau F des impulsions émises soit convergent. Ce faisceau peut alors être collimaté, permettant de mesurer les vitesses de cibles situées à des distances d'éloignement D qui sont variables dans une très large étendue.

Le mode de réalisation de [Fig. 5] utilise une détection directe de la partie des impulsions qui est rétroréfléchie par la cible T, à la place de la détection hétérodyne de [Fig. 1]. Pour cela, la modulation de fréquence optique qui était mise en œuvre précédemment peut être remplacée par une modulation d'amplitude, qui est effectuée avec une fréquence de modulation variable. Une telle modulation d'amplitude à variation de fréquence de modulation peut être produite par le modulateur acousto-optique 14, lorsque le contrôleur de modulation 40 est configuré de façon appropriée. Par exemple, le modulateur acousto-optique 14 produit une modulation sinusoïdale d'amplitude à l'intérieur de chaque impulsion, et la fréquence de cette modulation sinusoïdale d'amplitude varie entre le début et la fin de l'impulsion. De préférence, elle varie linéairement en fonction du temps, c'est-à-dire avec une pente de variation qui est constante. A titre d'exemple, la fréquence de modulation de l'amplitude du rayonnement dans chaque impulsion peut varier entre la valeur initiale de 10 MHz en début d'impulsion, et la valeur finale de 100 MHz en fin d'impulsion.

Les variations de puissance instantanée qui en résultent pour la partie des impulsions qui a été rétroréfléchie par la cible T sont suffisamment lentes pour être détectées en temps réel par le photodétecteur 22. Le signal de détection qui est délivré par ce dernier peut alors être analysé par l'unité de traitement de signal 30 de la même façon que précédemment. Pour cette raison, la description de cette analyse n'est pas répétée. Il est seulement indiqué que le perfectionnement des impulsions émises successivement qui ont des pentes opposées de variation linéaire de la fréquence de modulation est encore applicable, en l'appliquant à la fréquence variable de modulation d'amplitude.

Il est entendu que l'invention peut être reproduite en modifiant des aspects secondaires des modes de réalisation qui ont été décrits en détail ci-dessus, tout en conservant certains au moins des avantages cités. Notamment, les composants cités peuvent être remplacés par d'autres composants ou combinaisons de composants qui produisent une fonction équivalente à celle mentionnée. Enfin, les valeurs numériques qui ont été citées ne l'ont été qu'à titre d'illustration, et peuvent être changées en fonction de l'application considérée.

## Revendications

1. Système LIDAR adapté pour mesurer une vitesse d'au moins une cible, et comprenant :
- une voie d'émission (10), adaptée pour émettre des impulsions de rayonnement en direction de la cible à travers une optique de sortie (18) du système LIDAR ;
- une voie de détection (20), comprenant un photodétecteur (22), et adaptée pour collecter, aussi à travers l'optique de sortie (18), et diriger sur le photodétecteur, une partie des impulsions qui a été rétroréfléchie ou rétrodiffusée par la cible, de façon à produire un signal de détection ; et
- une unité de traitement de signal (30), configurée pour délivrer un résultat de la mesure de vitesse qui est relatif à la cible, à partir du signal de détection,
le système LIDAR étant **caractérisé en ce que** :
- la voie d'émission (10) est adaptée en outre pour varier une fréquence de modulation du rayonnement à l'intérieur de chaque impulsion, de sorte qu'une composante du signal de détection qui est utile pour mesurer la vitesse et appelée composante utile, soit décalée spectralement en fonction d'une distance d'éloignement de la cible par rapport au système LIDAR ; et
- l'unité de traitement de signal (30) est configurée en outre pour extraire la composante utile d'un spectre du signal de détection, de façon à isoler ladite composante utile par rapport à au moins une autre composante du signal de détection qui résulte d'une rétro-réflexion ou rétrodiffusion partielle des impulsions émises se produisant dans l'optique de sortie (18) du système LIDAR, et pour obtenir le résultat de la mesure de vitesse à partir de la composante utile extraite.

2. Système LIDAR selon la revendication 1, adapté pour mesurer une vitesse anémométrique, la cible étant constituée par des particules qui sont situées dans une portion d'atmosphère, les impulsions étant émises par la voie d'émission (10) en direction de la portion d'atmosphère, et la voie de détection (20) étant adaptée pour collecter et détecter la partie des impulsions qui a été rétrodiffusée par les particules situées dans ladite portion d'atmosphère.

3. Système LIDAR selon la revendication 1 ou 2, adapté de sorte que la fréquence de modulation qui est variée à l'intérieur de chaque impulsion soit une fréquence optique du rayonnement de ladite impulsion.

4. Système LIDAR selon l'une quelconque des revendications précédentes, dans lequel la voie d'émission (10) est adaptée pour varier la fréquence de modulation à l'intérieur de chaque impulsion selon une rampe de modulation de fréquence à pente constante.

5. Système LIDAR selon la revendication 4, dans lequel la voie d'émission (10) est adaptée pour émettre les impulsions de rayonnement toutes avec la même rampe de modulation de fréquence, et dans lequel l'unité de traitement de signal (30) est configurée pour obtenir le résultat de la mesure de vitesse à partir d'une seconde contribution à un décalage fréquentiel qui est relatif à la composante utile extraite, ladite seconde contribution étant calculée en soustrayant dudit décalage fréquentiel une première contribution qui est produite par la rampe de modulation de fréquence en combinaison avec la distance d'éloignement de la cible.

6. Système LIDAR selon la revendication 4, dans lequel la voie d'émission (10) est adaptée pour changer un signe de la pente de la rampe de variation de la fréquence de modulation entre deux impulsions qui sont émises successivement.

7. Système LIDAR selon la revendication 6, dans lequel la voie d'émission (10) est adaptée de sorte que la pente de la rampe de variation de la fréquence de modulation soit égale en valeur absolue mais opposée en signe entre deux impulsions qui sont émises successivement.

8. Système LIDAR selon la revendication 7, dans lequel l'unité de traitement de signal (30) est configurée pour obtenir le résultat de la mesure de vitesse à partir d'une somme de deux décalages fréquentiels respectifs relatifs à une première composante utile extraite qui correspond à celles des impulsions émises pour lesquelles la pente de la rampe de variation de la fréquence de modulation est positive, et à une seconde composante utile extraite qui correspond à celles des impulsions émises pour lesquelles la pente de la rampe de variation de la fréquence de modulation est négative.

9. Système LIDAR selon la revendication 8, dans lequel l'unité de traitement de signal (30) est configurée en outre pour obtenir une évaluation de la distance d'éloignement de la cible par rapport au système LIDAR à partir d'une différence entre les décalages fréquentiels respectifs relatifs à la première composante utile extraite qui correspond à celles des impulsions émises pour lesquelles la pente de la rampe de variation de la fréquence de modulation est positive, et à la seconde composante utile extraite qui correspond à celles des impulsions émises pour lesquelles la pente de la rampe de variation de la fréquence de modulation est négative.

10. Système LIDAR selon l'une quelconque des revendications précédentes, dans lequel la voie de détection (20) est agencée pour effectuer une détection hétérodyne de la partie rétroréfléchie ou rétrodiffusée des impulsions.

11. Procédé de mesure d'une vitesse d'au moins une cible en utilisant un système LIDAR, comprenant les étapes suivantes :
/1/ émettre des impulsions de rayonnement en direction de la cible à travers une optique de sortie (18) ;
/2/ en utilisant l'optique de sortie (18), collecter une partie des impulsions qui a été rétroréfléchie ou rétrodiffusée par la cible ;
/3/ détecter la partie rétroréfléchie ou rétrodiffusée des impulsions, en utilisant un photodétecteur (22) qui produit un signal de détection ; et
/4/ à partir du signal de détection, délivrer un résultat de la mesure de vitesse qui est relatif à la cible,
le procédé étant **caractérisé en ce que** :
- une fréquence de modulation du rayonnement est variée à l'intérieur de chaque impulsion lors de l'étape /1/, de sorte qu'une composante du signal de détection qui est utilisée à l'étape /4/ pour la mesure de vitesse et appelée composante utile, soit décalée spectralement en fonction d'une distance d'éloignement de la cible par rapport au système LIDAR ; et
- la composante utile est extraite d'un spectre du signal de détection lors de l'étape /4/, de façon à isoler ladite composante utile par rapport à au moins une autre composante du signal de détection qui résulte d'une rétro-réflexion ou rétrodiffusion partielle des impulsions émises se produisant dans l'optique de sortie (18), puis le résultat de la mesure de vitesse est obtenu à partir de la composante utile extraite.

12. Procédé selon la revendication 11, utilisé pour mesurer une vitesse anémométrique, suivant lequel la cible est constituée par des particules qui sont situées dans une portion d'atmosphère, les impulsions sont émises en direction de la portion d'atmosphère, et la partie des impulsions qui a été rétrodiffusée par les particules situées dans ladite portion d'atmosphère est collectée et détectée.

13. Procédé selon la revendication 11 ou 12, suivant lequel le système LIDAR est embarqué à bord d'un aéronef (100), et le procédé est exécuté pendant un vol de l'aéronef.

## Patentansprüche

1. LIDAR-System, das zum Messen einer Geschwindigkeit mindestens eines Ziels angepasst ist und umfassend:
- einen Vorwärtskanal (10), der zum Emittieren von Strahlungsimpulsen in Richtung des Ziels quer durch eine Ausgangsoptik (18) des LIDAR-Systems angepasst ist;
- einen Detektionskanal (20), umfassend einen Photodetektor (22), und angepasst zum Sammeln, ebenfalls quer durch die Ausgangsoptik (18), und, zum Richten auf den Photodetektor, eines Teils der Impulse, der durch das Ziel retroreflektiert oder rückgestreut wurde, um ein Detektionssignal zu erzeugen; und
- eine Signalverarbeitungseinheit (30), die zum Liefern eines Ergebnisses der Geschwindigkeitsmessung, das sich auf das Ziel aus dem Detektionssignal bezieht, konfiguriert ist,
wobei das LIDAR-System **dadurch gekennzeichnet ist, dass**:
- der Vorwärtskanal (10) ferner zum Variieren einer Modulationsfrequenz der Strahlung im Inneren jedes Impulses angepasst ist, sodass eine Komponente des Detektionssignals, die zum Messen der Geschwindigkeit nützlich ist, genannt Nutzkomponente, in Abhängigkeit von einer Entfernungsdistanz des Ziels im Verhältnis zu dem LIDAR-System spektral verschoben wird; und
- die Signalverarbeitungseinheit (30) ferner zum Extrahieren der Nutzkomponente eines Spektrums des Detektionssignals, um die Nutzkomponente gegenüber mindestens einer anderen Komponente des Detektionssignals zu isolieren, die aus einer teilweisen Rückreflexion oder Rückstreuung der emittierten Impulse resultiert, die in der Ausgangsoptik (18) des LIDAR-Systems erzeugt werden, und zum Erhalten des Ergebnisses der Geschwindigkeitsmessung aus der extrahierten Nutzkomponente konfiguriert ist.

2. LIDAR-System nach Anspruch 1, das zum Messen einer anemometrischen Geschwindigkeit angepasst ist, wobei das Ziel aus Partikeln besteht, die in einem Atmosphärenabschnitt gelegen sind, wobei die Impulse durch den Vorwärtskanal (10) in Richtung des Atmosphärenabschnitts emittiert werden, und der Detektionskanal (20) zum Sammeln und Detektieren des Teils der Impulse angepasst ist, der durch die Partikel, die in dem Atmosphärenabschnitt gelegen sind, rückgestreut wurde.

3. LIDAR-System nach Anspruch 1 oder 2, das angepasst ist, sodass die Modulationsfrequenz, die im Inneren jedes Impulses variiert wird, eine optische Frequenz der Strahlung des Impulses ist.

4. LIDAR-System nach einem der vorstehenden Ansprüche, wobei der Vorwärtskanal (10) zum Variieren der Modulationsfrequenz im Inneren jedes Impulses gemäß einer Frequenzmodulationsrampe mit konstanter Steigung angepasst ist.

5. LIDAR-System nach Anspruch 4, wobei der Vorwärtskanal (10) zum Emittieren der Strahlungsimpulse, alle mit derselben Frequenzmodulationsrampe, angepasst ist und wobei die Signalverarbeitungseinheit (30) zum Erhalten des Ergebnisses der Geschwindigkeitsmessung aus einem zweiten Beitrag zu einer Frequenzverschiebung konfiguriert ist, die sich auf die extrahierte Nutzkomponente bezieht, wobei der zweite Beitrag durch Subtrahieren, von der Frequenzverschiebung, eines ersten Beitrags berechnet wird, der durch die Frequenzmodulationsrampe in Kombination mit der Entfernungsdistanz des Ziels erzeugt wird.

6. LIDAR-System nach Anspruch 4, wobei der Vorwärtskanal (10) zum Ändern eines Vorzeichens der Steigung der Rampe der Variation der Modulationsfrequenz zwischen zwei Impulsen, die nacheinander emittiert werden, angepasst ist.

7. LIDAR-System nach Anspruch 6, wobei der Vorwärtskanal (10) angepasst ist, sodass die Steigung der Rampe der Variation der Modulationsfrequenz dem Absolutwert nach gleich, aber im Vorzeichen entgegengesetzt zwischen zwei aufeinanderfolgend emittierten Impulsen ist.

8. LIDAR-System nach Anspruch 7, wobei die Signalverarbeitungseinheit (30) zum Erhalten des Ergebnisses der Geschwindigkeitsmessung aus einer Summe von zwei jeweiligen Frequenzverschiebungen konfiguriert ist, die sich auf eine erste extrahierte Nutzkomponente, die denjenigen der emittierten Impulse entspricht, für welche die Steigung der Rampe der Variation der Modulationsfrequenz positiv ist, und auf eine zweite extrahierte Nutzkomponente beziehen, die denjenigen der emittierten Impulse entspricht, für welche die Steigung der Rampe der Variation der Modulationsfrequenz negativ ist.

9. LIDAR-System nach Anspruch 8, wobei die Signalverarbeitungseinheit (30) ferner zum Erhalten einer Bewertung der Entfernungsdistanz des Ziels im Verhältnis zu dem LIDAR-System aus einer Differenz zwischen den jeweiligen Frequenzverschiebungen konfiguriert ist, die sich auf die extrahierte erste Nutzkomponente, welche denjenigen der emittierten Impulse entspricht, für die die Steigung der Rampe der Variation der Modulationsfrequenz positiv ist, und auf die extrahierte zweite Nutzkomponente beziehen, welche denjenigen der emittierten Impulse entspricht, für die die Steigung der Rampe der Variation der Modulationsfrequenz negativ ist.

10. LIDAR-System nach einem der vorstehenden Ansprüche, wobei der Detektionskanal (20) zum Durchführen einer Heterodyn-Detektion des retroreflektierten oder rückgestreuten Teils der Impulse angeordnet ist.

11. Verfahren zum Messen einer Geschwindigkeit mindestens eines Ziels unter Verwendung eines LIDAR-Systems, umfassend die folgenden Schritte:
/1/ Emittieren von Strahlungsimpulsen in Richtung des Ziels quer durch eine Ausgangsoptik (18);
/2/ unter Verwendung der Ausgangsoptik (18), Sammeln eines Teils der Impulse, der von dem Ziel retroreflektiert oder rückgestreut wurde;
/3/ Detektieren des retroreflektierten oder rückgestreuten Teils der Impulse unter Verwendung eines Photodetektors (22), der ein Detektionssignal erzeugt; und
/4/ aus dem Detektionssignal, Liefern eines Ergebnisses der Geschwindigkeitsmessung, das sich auf das Ziel bezieht,
wobei das Verfahren **dadurch gekennzeichnet ist, dass**:
- eine Modulationsfrequenz der Strahlung im Inneren jedes Impulses während des Schritts /1/ variiert, sodass eine Komponente des Detektionssignals, die in dem Schritt /4/ für die Geschwindigkeitsmessung, und genannt Nutzkomponente, in Abhängigkeit von einer Entfernungsdistanz des Ziels im Verhältnis zu dem LIDAR-System spektral verschoben wird; und
- die Nutzkomponente aus einem Spektrum des Detektionssignals während des Schritts /4/ extrahiert wird, um die Nutzkomponente relativ zu mindestens einer anderen Komponente des Detektionssignals zu isolieren, die aus einer partiellen Rückreflexion oder Rückstreuung der emittierten Impulse resultiert, die in der Ausgangsoptik (18) erzeugt wird, wobei dann das Ergebnis der Geschwindigkeitsmessung aus der extrahierten Nutzkomponente erhalten wird.

12. Verfahren nach Anspruch 11, das zum Messen einer anemometrischen Geschwindigkeit verwendet wird, wobei dem folgend das Ziel aus Partikel besteht, die in einem Atmosphärenabschnitt gelegen sind, wobei die Impulse in Richtung des Atmosphärenabschnitts emittiert werden, und der Teil der Impulse, der durch die Partikel, die in dem Atmosphärenabschnitt gelegen sind, rückgestreut wurde, gesammelt und detektiert wird.

13. Verfahren nach Anspruch 11 oder 12, wobei das LIDAR-System an Bord eines Luftfahrzeugs (100) ist, und das Verfahren während eines Flugs des Luftfahrzeugs ausgeführt wird.

## Claims

1. A LIDAR system adapted to measure a velocity of at least one target, and comprising:
- a emission channel (10), adapted to emit radiation pulses towards the target through an output optic (18) of the LIDAR system;
- a detection channel (20), comprising a photodetector (22), and adapted to collect, also through the output optic (18), and direct onto the photodetector, a portion of the pulses that has been retroreflected or backscattered by the target, so as to produce a detection signal; and
- a signal processing unit (30), configured to output a result of the velocity measurement which is relative to the target, from the detection signal,
the LIDAR system being **characterized in that**:
- the emission channel (10) is further adapted to vary a modulation frequency of the radiation within each pulse, so that a component of the detection signal that is useful for measuring velocity, referred to as the useful component, is spectrally shifted as a function of a distance of the target from the LIDAR system; and
- the signal processing unit (30) is further configured to extract the useful component from a spectrum of the detection signal, so as to isolate said useful component from at least one other component of the detection signal which results from a partial retroreflection or backscattering of the emitted pulses occurring in the output optic (18) of the LIDAR system, and to obtain the result of the velocity measurement from the extracted useful component.

2. The LIDAR system according to claim 1, adapted to measure airspeed, the target being particles which are located in a portion of atmosphere, the pulses being emitted by the emission channel (10) towards the portion of atmosphere, and the detection channel (20) being adapted to collect and detect that part of the pulses which has been backscattered by the particles located in said portion of atmosphere.

3. The LIDAR system according to claim 1 or 2, adapted so that the modulation frequency which is varied within each pulse is an optical frequency of the radiation of said pulse.

4. The LIDAR system according to any one of the preceding claims, wherein the emission channel (10) is adapted to vary the modulation frequency within each pulse according to a constant-slope frequency modulation ramp.

5. The LIDAR system according to claim 4, wherein the emission channel (10) is adapted to emit the radiation pulses all with the same frequency modulation ramp, and wherein the signal processing unit (30) is configured to obtain the result of the velocity measurement from a second contribution to a frequency offset that is relative to the extracted useful component, said second contribution being calculated by subtracting from said frequency offset a first contribution which is produced by the frequency modulation ramp in combination with the distance away from the target.

6. The LIDAR system according to claim 4, wherein the emission channel (10) is adapted to change a sign of the slope of the modulation frequency variation ramp between two pulses that are emitted successively.

7. The LIDAR system according to claim 6, wherein the emission channel (10) is adapted so that the slope of the modulation frequency variation ramp is equal in absolute value but opposite in sign between two pulses which are emitted successively.

8. The LIDAR system according to claim 7, wherein the signal processing unit (30) is configured to obtain the result of the velocity measurement from a sum of two respective frequency shifts relating to a first extracted useful component which corresponds to those emitted pulses for which the slope of the modulation frequency variation ramp is positive, and to a second extracted useful component which corresponds to those emitted pulses for which the slope of the modulation frequency variation ramp is negative.

9. The LIDAR system according to claim 8, wherein the signal processing unit (30) is further configured to obtain an evaluation of the distance of the target from the LIDAR system from a difference between the respective frequency shifts relating to the first extracted useful component which corresponds to those emitted pulses for which the slope of the modulation frequency variation ramp is positive, and the second extracted useful component which corresponds to those emitted pulses for which the slope of the modulation frequency variation ramp is negative.

10. The LIDAR system according to any one of the preceding claims, wherein the detection channel (20) is arranged to perform heterodyne detection of the retroreflected or backscattered portion of the pulses.

11. A method of measuring a velocity of at least one target using a LIDAR system, comprising the following steps:
/1/ emitting radiation pulses in the direction of the target through an output optic (18);
/2/ using the output optic (18), collecting a portion of the pulses that have been retroreflected or backscattered by the target;
/3/ detecting the retroreflected or backscattered portion of the pulses, using a photodetector (22) which produces a detection signal; and
/4/ from the detection signal, outputting a velocity measurement result relative to the target,
the method being **characterized in that**:
- a modulation frequency of the radiation is varied within each pulse during step /1/, so that a component of the detection signal used in step /4/ for velocity measurement, referred to as the useful component, is spectrally shifted as a function of a distance of the target from the LIDAR system; and
- the useful component is extracted from a spectrum of the detection signal in step /4/, so as to isolate said useful component from at least one other component of the detection signal which results from a partial retroreflection or backscattering of the emitted pulses occurring in the output optic (18), then the result of the velocity measurement is obtained from the extracted useful component.

12. The method according to claim 11, used to measure airspeed, according to which the target consists of particles which are located in a portion of atmosphere, the pulses are emitted in the direction of the portion of atmosphere, and the part of the pulses which has been backscattered by the particles located in said portion of atmosphere is collected and detected.

13. The method according to claim 11 or 12, wherein the LIDAR system is carried on board an aircraft (100), and the method is carried out during a flight of the aircraft.
